(19) Europäisches Patentamt
European Patent Office
Office européen des brevets

(11) **EP 1 920 421 B1**

(12) **FASCICULE DE BREVET EUROPEEN**

(45) Date de publication et mention de la délivrance du brevet:
**03.12.2008 Bulletin 2008/49**

(21) Numéro de dépôt: **06779034.5**

(22) Date de dépôt: **10.07.2006**

(51) Int Cl.:
*G08G 1/16* (2006.01)

(86) Numéro de dépôt international:
**PCT/FR2006/050695**

(87) Numéro de publication internationale:
**WO 2007/020358 (22.02.2007 Gazette 2007/08)**

(54) **PROCEDE ET SYSTEME DE PREDICTION DE CHOC ENTRE UN VEHICULE ET UN PIETON**

VERFAHREN UND SYSTEM ZUR VORHERSAGE DES STOSSES ZWISCHEN EINEM FAHRZEUG UND EINEM FUSSGÄNGER

METHOD AND SYSTEM FOR PREDICTING THE IMPACT BETWEEN A VEHICLE AND A PEDESTRIAN

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **19.08.2005 FR 0508631**

(43) Date de publication de la demande:
**14.05.2008 Bulletin 2008/20**

(73) Titulaire: **RENAULT S.A.S.**
**92100 Boulogne Billancourt (FR)**

(72) Inventeurs:
• **BECT, Julien**
  **F-06210 Mandelieu (FR)**
• **WAKIM, Christophe**
  **F-75007 Paris (FR)**

(56) Documents cités:
• **WAKIM C F ET AL: "Design of pedestrian detection systems for the prediction of car-to-pedestrian accidents" INTELLIGENT TRANSPORTATION SYSTEMS, 2004. PROCEEDINGS. THE 7TH INTERNATIONAL IEEE CONFERENCE ON WASHINGTON, DC, USA OCT. 3-6, 2004, PISCATAWAY, NJ, USA, IEEE, 3 octobre 2004 (2004-10-03), pages 696-701, XP010772245 ISBN: 0-7803-8500-4**

## Description

La présente invention concerne un procédé de prédiction de choc entre un véhicule et un piéton mobile, dans le but d'améliorer la sécurité des piétons. Elle est appliquée plus particulièrement dans un système de protection des piétons de type pré crash, qui déclenche des contre-mesures adaptées comme un freinage d'urgence ou un changement de trajectoire du véhicule, quelques instants avant le choc contre un piéton détecté dans le voisinage avant du véhicule. Elle concerne également un système embarqué de mise en oeuvre dudit procédé.

Un système de pré crash piéton doit pouvoir prédire un choc véhicule-piéton avec estimation d'un risque d'impact dans un laps de temps très court, entre quelques centaines de millisecondes et une seconde, afin de déclencher des réactions adaptées pour éviter le choc prédit ou en limiter les conséquences.

Ce système reçoit des informations sur l'état dynamique du véhicule, son régime moteur, la position des différentes commandes du conducteur, des informations sur le ou les piétons détectés, comme leur dimension, leur position ou leur vitesse par exemple, pour estimer le risque qu'un choc véhicule-piéton se produise entre deux instants $t_0$ et $t_0 + \Delta T$.

Comme cela est décrit dans la demande de brevet français FR 2 864 673, ou encore dans l'article "Design of Pedestrian Detection Systems for the Prediction of Car-to-Pedestrian Accidents", Wakin C.F et al, Intelligent Transportation Systems, Octobre 2004, Washington DC, pages 696-701, concernant un procédé de prédiction de choc de type probabiliste, il faut générer les trajectoires futures du véhicule et du piéton à partir de modèles réalistes et adaptés, puis à chaque incrément de pas temporel, il faut tester s'il y a choc ou pas en supposant que chaque variable d'état peut prendre un ensemble de valeurs auxquelles sont associées des probabilités afin de quantifier les risques. Cette quantification peut se faire par des simulations de Monte Carlo, qui sont par exemple décrites dans un article de E.A. JOHNSON, L.A. BERGMAN et B.F. SPENCER, intitulé « Intelligent Monte Carlo Simulation and Discrepancy Sensitivity » et publié avec les références de publication suivantes : P.D.Spanos (ed.), Computational Stochastic Mechanics, Balkema, Rotterdam, 1999,31-39.

Cette quantification consiste :

- à tirer un nombre initial N de particules correspondant aux couples de trajectoires de véhicule et de piéton ayant pour origine la situation dont on veut évaluer les caractéristiques de choc, l'état des particules dépendant des mesures et des estimations délivrées par le capteur de détection d'obstacles du système,
- à prédire les trajectoires des particules,
- puis à tester, pour chaque pas temporel discret, s'il y a choc entre le véhicule et chaque particule correspondant au piéton.

Dans le cas des simulations de Monte Carlo simples, chacune des N particules i correspondant à un couple de trajectoires, est affectée d'un poids p = 1/N, uniforme sur l'ensemble des particules, durant toute la durée $\Delta T$ de la simulation. Pour estimer la probabilité de choc $P_{choc}$ entre les instants $t_0$ et $t_0+\Delta T$, il suffit de faire la somme des poids affectant les particules pour lesquelles la simulation se termine par un choc. Le temps avant impact peut être estimé en prenant la moyenne des temps avant impact des trajectoires qui se terminent par un impact. Les incertitudes affectant l'évolution de la trajectoire du piéton sont quantifiées par la distribution des probabilités. Un grand nombre de scénarii sont créés pendant la simulation à l'aide d'un générateur de nombres pseudo aléatoires, puis l'issue de chaque couple de trajectoires, ou particule, est évaluée. En cas d'impact, les caractéristiques sont mémorisées, puis l'application de statistiques sur les issues de l'ensemble des trajectoires permet d'estimer la distribution des différentes données décrivant le choc, c'est-à-dire le temps avant impact, la zone d'impact, la vitesse d'impact et la probabilité de choc.

L'inconvénient d'une méthode actuelle de prédiction de choc probabiliste par simulation de Monte Carlo tient à la puissance de calcul requise, qui empêche son utilisation en temps réel, à moins de sacrifier la précision des résultats. De plus, avec le modèle de trajectoires de piétons développé dans l'antériorité citée, basé sur quatre états discrets, avec un nombre N de trajectoires supérieur à 100, un tel procédé de prédiction ne peut assurer des performances en temps réel.

Le but de l'invention est de proposer une prédiction améliorée de choc entre un véhicule et un piéton de type probabiliste.

Pour cela, un premier objet de l'invention est un procédé de prédiction de choc entre un véhicule et un piéton mobile détecté, comprenant une phase de génération de N particules représentant des couples de trajectoires de véhicule et de piéton, ayant pour origine la situation dont les caractéristiques de choc sont à évaluer, à partir d'un modèle de véhicule et d'un modèle de piéton à plusieurs états discrets, ainsi qu'à partir des positions initiales du véhicule et du piéton et d'informations sur leurs états cinématiques respectifs, suivie d'une phase d'évaluation de l'issue de chaque particule, caractérisé en ce que l'espace des états des particules est découpé en zones d'importance variable définie comme une valeur numérique directement liée à l'intérêt accordé à chaque particule et dépendant de son état cinématique actuel, et en ce qu'en cas de non choc prédit pour une particule testée, le procédé calcule le rapport entre l'importance de la particule à l'instant présent et son importance à l'instant précédent pour décider, dans le cas d'une particule dont l'importance croît, de la démultiplier en un nombre entier n, supérieur à 1, de particules affectées chacune d'un nouveau poids et, dans le cas d'une particule dont l'importance décroît, de la supprimer aléatoirement, sa probabilité de survie étant égale au rapport d'importance, l'estimation de la probabilité de choc et des caractéristiques dudit choc prédit étant obtenue ensuite par l'application de statistiques sur les issues de l'ensemble des N particules.

Avantageusement, selon l'invention, le calcul de prédiction de choc véhicule-piéton permet un résultat en temps réel.

Selon une autre caractéristique du procédé de prédiction de choc, le découpage de l'espace devant le véhicule, selon le repère orthonormé instantané attaché à l'avant du véhicule, est réalisé à partir de la distance relative entre le véhicule et le piéton, définissant des zones d'importance en forme d'anneaux circulaires, centrés sur le milieu du pare-choc du véhicule et dont le diamètre est le pare-choc.

Selon une autre caractéristique du procédé de prédiction de choc, le découpage de l'espace devant le véhicule, selon le repère orthonormé instantané attaché à l'avant du véhicule, est réalisé à partir de la composante longitudinale de la vitesse relative due au véhicule et de sa composante latérale qui est assimilée à celle du piéton, définissant des zones d'importance en forme d'ellipses, centrées sur le milieu du pare-choc du véhicule, de demi petit axe sur l'axe des ordonnées et de demi grand axe sur l'axe des abscisses.

Selon une autre caractéristique du procédé de prédiction de choc, le découpage de l'espace devant le véhicule, selon le repère orthonormé instantané attaché à l'avant du véhicule, est réalisé selon la valeur de la durée de vie de la particule, ou temps avant dépassement, nécessaire pour que la position longitudinale du piéton soit au niveau de la face avant du véhicule, à chaque instant $t_i$ de la simulation, et plus cette durée de vie est courte, plus l'importance de la zone est grande, seules la position longitudinale du piéton et sa vitesse étant alors prises en compte, définissant des zones d'importance en forme de bandes parallèles à l'axe des ordonnées.

Selon une autre caractéristique du procédé de prédiction de choc, le découpage de l'espace devant le véhicule, selon le repère orthonormé instantané attaché à l'avant du véhicule, est réalisé en tenant compte de la position angulaire du piéton dans le plan défini par les axes Ox et Oy du repère du véhicule, obtenue avec le rapport de sa position latérale y sur sa position longitudinale x, définissant des zones d'importance en forme de secteurs d'origine 0, faisant par rapport à l'axe Ox des abscisses, un angle θ égal à l'arctangente du rapport entre ces deux positions :

$$\theta = \arctan\left(\frac{y}{x}\right).$$

Selon une autre caractéristique du procédé de prédiction de choc, le découpage de l'espace devant le véhicule, selon le repère orthonormé instantané attaché à l'avant du véhicule, est réalisé à partir de la direction de la vitesse relative du piéton par rapport au véhicule, obtenue soit par l'arc tangente du rapport entre sa vitesse longitudinale et sa vitesse latérale, soit par l'arc tangente du rapport entre la vitesse du piéton et celle du véhicule :

$$\alpha = \arctan\left(\frac{V_{pie}}{V_{veh}}\right).$$

définissant des zones d'importance en forme de triangles isocèles, de hauteur sur l'axe 0x des abscisses et de base sur l'axe Oy des ordonnées, et d'angle α au sommet défini par l'arc tangente du rapport entre la vitesse du piéton et celle du véhicule :

$$\alpha = \arctan\left(\frac{V_{pie}}{V_{veh}}\right).$$

Selon une autre caractéristique, le procédé de prédiction de choc comporte les étapes suivantes :

- la détermination de l'état cinématique initial du véhicule et du piéton, suivie de la génération d'un nombre ($N_i$) de particules, chacune affectée d'un poids et correspondant à un couple de trajectoires simulées pour le véhicule et le piéton à l'instant ($t_i$), et pour chacune desquelles un état cinématique est simulé qui est ensuite comparé à l'état initial,

- dans le cas où il y a choc, l'estimation et la mémorisation des caractéristiques du choc, avant de supprimer la particule k considérée et de poursuivre la simulation avec la particule suivante k+1 jusqu'à la $N_i^{ème}$ particule,

- dans le cas d'une sortie de la zone de choc, sans qu'il y ait eu choc, la mémorisation des caractéristiques de la trajectoire k avant sa suppression et la poursuite de la simulation avec la particule suivante k+1 jusqu'à la $N_i^{ème}$ particule,

- dans le cas où il n'y a pas choc, la vérification que la simulation n'est pas terminée, par contre si la simulation est terminée sans choc, elle se poursuit encore par la mémorisation de la dernière trajectoire et sa suppression,

- dans le cas où il n'y a pas choc, la particule k ayant survécu, le calcul du rapport $\beta_{i,k}$ entre la valeur de l'importance associée à son nouvel état à l'instant $t_i$ dans l'espace d'état et sa valeur à l'instant $t_{i-1}$ précédent, qui est ensuite comparé à 1 :

  • si $\beta_{i,k}$ est égal à 1, cette trajectoire k ne présente pas un intérêt grandissant et le procédé passe à la trajectoire simulée suivante k + 1,
  • si $\beta_{i,k}$ est inférieur à 1, la suppression aléatoire par une étape de « roulette russe » de la particule qui est sans intérêt, avec attribution d'un nouveau poids si elle survit,

- si $\beta_{i,k}$ est supérieur à 1, la démultiplication par une étape de « splitting » de la particule considérée comme importante en un nombre n(k) de nouvelles particules affectées chacune d'un poids, différent de celui de la particule k importante, et qui seront traitées à l'instant $t_{i+1}$ suivant,

- après la vérification que toutes les $N_i$ particules ont été traitées, l'estimation de la probabilité de choc et des caractéristiques du choc éventuel à partir des statistiques sur les poids mémorisés.

Un second objet de l'invention est un système de mise en oeuvre du procédé de prédiction de choc entre un véhicule et un piéton mobile détecté, embarqué sur le véhicule, comportant des moyens de détection d'obstacles dans l'environnement du véhicule, associés à des moyens d'estimation de leur position et de leur vitesse, reliés à des moyens de prédiction de choc véhicule/piéton, qui reçoivent par ailleurs des informations sur la dynamique du véhicule équipé dudit système de la part de capteurs connectés aux commandes du véhicule, ces moyens de prédiction de choc associant à chaque obstacle détecté une probabilité de choc, un temps avant choc, une zone de choc prévue et éventuellement une vitesse au choc, qu'ils envoient à des moyens de sélection de la contre-mesure optimale que le système doit appliquer en urgence pour protéger le piéton repéré.

D'autres caractéristiques et avantages de l'invention apparaîtront à la lecture de la description du procédé, illustrée par les figures suivantes qui sont :

- la figure 1 : un exemple non limitatif d'organigramme du procédé de prédiction de choc véhicule-piéton,
- la figure 2 : un exemple non limitatif de simulation de Monte-Carlo, avec un nombre N particules, dans le repère du véhicule,
- la figure 3 : une vue schématique de dessus d'un véhicule et d'un piéton, doté d'un repère orthonormé,
- la figure 4 : un exemple de modélisation géométrique d'un choc frontal entre un véhicule et un piéton,
- la figure 5 : une variante de définition de la zone de choc,
- les figures 6 à 11 : des exemples non limitatifs de zones d'importance.

Le procédé de prédiction de choc entre un véhicule et un piéton mobile selon l'invention est de type probabiliste, chaque variable d'état du modèle de trajectoire du piéton pouvant prendre un ensemble de valeurs auxquelles sont associées des probabilités, ce qui permet de quantifier les risques. Le but du procédé est d'estimer, pour une situation véhicule-piéton donnée, la probabilité de choc entre l'instant présent $t_0$ et l'instant limite de prédiction $t_0+\Delta T$, $\Delta T$ étant l'horizon de prédiction temporel, et d'estimer les caractéristiques de l'impact, soit le temps avant impact, la zone d'impact et la vitesse d'impact notamment.

Selon l'invention, le procédé tient compte du fait que les trajectoires des différentes particules ne présentent pas toutes le même intérêt. Pour la prédiction de choc véhicule-piéton, les particules qui se trouvent loin de la zone de choc, ce qui correspond à un piéton traversant devant le véhicule à une distance supérieure à 30 mètres par exemple, présentent beaucoup moins d'intérêt que les particules qui se trouvent au voisinage de la zone de choc. C'est pourquoi, la quantification des risques étant faite par des simulations de trajectoires de type Monte Carlo, le procédé selon l'invention utilise des méthodes de réduction de variance, telles que le « splitting » ou la « roulette russe » consistant à appliquer un échantillonnage d'importance sur les états afin d'améliorer les performances de la simulation.

Le procédé consiste tout d'abord à générer un nombre initial N de particules, correspondant chacune à un couple de trajectoires du véhicule et du piéton, l'état des particules dépendant des mesures et estimations délivrées par le capteur de détection de piétons du système équipant le véhicule, puis à traiter les N particules en testant, à chaque instant pour chaque particule, s'il y a choc entre le véhicule et le piéton. Ensuite, le procédé évalue l'issue de chaque couple de trajectoires et, d'une part, mémorise le nombre de particules susceptibles de subir un choc, avec leur poids, leurs caractéristiques de position et de vitesse, et d'autre part, attribue en cas de non choc prédit, à chaque particule, à chaque instant, une valeur numérique directement liée à l'intérêt accordé à cette particule et appelée « importance » ; elle dépend de l'état cinématique présent (position, vitesse...) de la particule. Il constate l'évolution de l'importance de ladite particule pour calculer son poids final qui va dépendre des zones d'importance qu'elle aura empruntées. Enfin, pour estimer la probabilité de choc pendant la durée de la simulation, le procédé fait la somme des poids des particules pour lesquelles la simulation se termine par un choc et estime les caractéristiques du choc prédit à partir de statistiques, comme le temps avant impact, la zone d'impact ou la vitesse d'impact.

Ainsi, selon une caractéristique de l'invention, dans le cas où il n'y a pas de choc, le procédé calcule le ratio d'importance $\beta$ entre l'état présent de la particule et son état à l'instant précédent.

Si le rapport entre l'importance de l'état présent et celle de l'état précédent est égal à 1, le procédé s'intéresse à la particule suivante.

Si l'état présent du piéton est plus important que son état précédent, le procédé va réaliser une étape de « splitting », c'est-à-dire de démultiplication de la particule dont l'importance croît. Elle est divisée en un nombre entier n, supérieur à 1, de nouvelles particules, chaque nouvelle particule étant affectée du poids de la particule initiale divisé par n, ce nouveau poids servant dans le calcul de la probabilité de choc. Ce nombre n est une fonction croissante du ratio d'importance β de la particule considérée.

Si l'état présent simulé du piéton est moins important que son état précédent, le procédé réalise une étape de « roulette russe », c'est-à-dire de suppression aléatoire de ladite particule considérée comme sans intérêt. Elle a une probabilité de survie p égale au ratio d'importance β. Deux cas peuvent se présenter : elle survit et son poids, servant pour la probabilité de choc, est alors multiplié par l'inverse du ratio d'importance β, ou bien elle meurt, son poids devient nul et cette trajectoire n'est plus utilisée.

Afin de ne pas introduire un biais supplémentaire par ces deux étapes, chaque particule est affectée d'un poids qui détermine sa contribution à la masse totale du nuage qu'elle constitue avec les autres, c'est-à-dire au calcul final de l'espérance de choc. Parfois, il est nécessaire de ré échantillonner le nuage afin de conserver le nombre de particules borné, quand le nombre de particules $N(t)$ est supérieur au nombre maximum $N_{max}$, défini en fonction des performances du calculateur. On peut choisir typiquement la valeur 256.

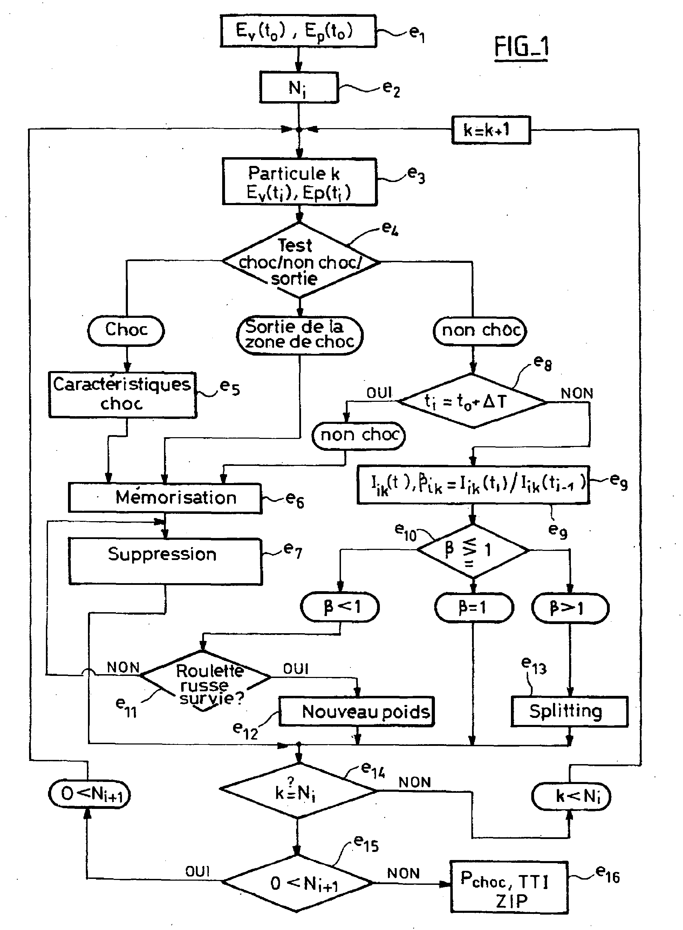

Un exemple d'organigramme du procédé de prédiction de choc véhicule-piéton est décrit à propos de la figure 1, qui comporte une première étape e1) de détermination de l'état cinématique initial du véhicule $E_v(t_o)$ et du piéton $E_p(t_o)$, c'est-à-dire de leurs positions et de leurs vitesses respectives, à l'instant initial $t_o$ de la simulation, suivie d'une deuxième étape e2) de génération d'un nombre $N_i$ de particules, affectées chacune d'un poids $p_i$, correspondant à $N_i$ couples de trajectoires simulées pour le véhicule et le piéton, à l'instant $t_i = t_{i-1} + \delta t$, $\delta t$ étant le pas temporel d'échantillonnage, sachant leurs états à $t_{i-1}$.

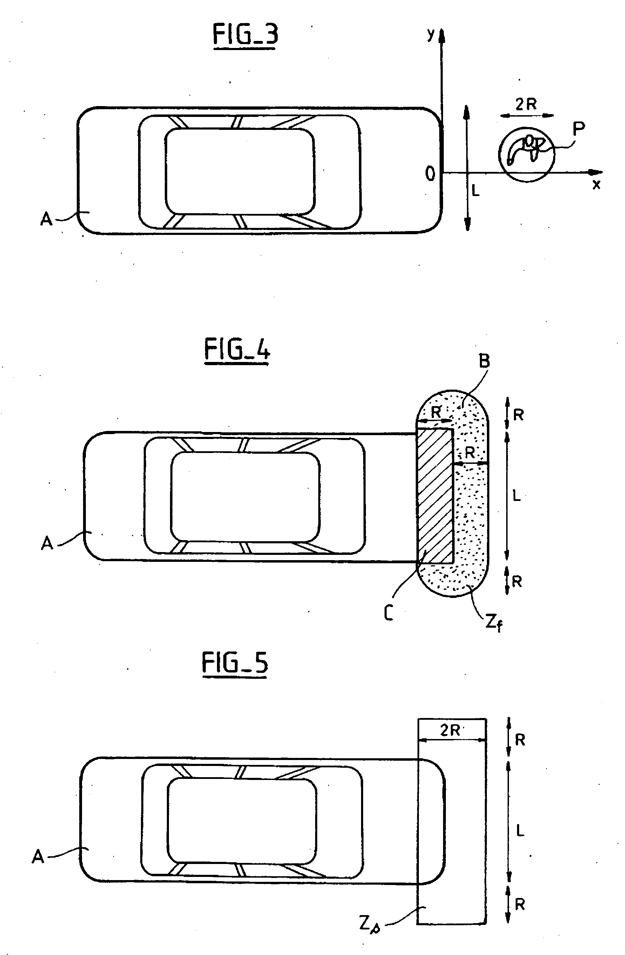

Pour chaque particule k des $N_i$ particules simulées à l'instant $t_i$, le procédé génère un état simulé pour le véhicule $E_v(t_i)$ et un état simulé $E_P(t_i)$ pour le piéton à l'étape e3) afin de procéder, à l'étape suivante e4), à un test de comparaison de ces deux états pour déterminer si, sur l'intervalle $[t_{i-1}, t_i]$ il y a choc et à quel instant, ou pas choc, ou bien encore si le piéton est sorti de la zone de choc définie entre le piéton et la face avant du véhicule. Des définitions de cette zone de choc sont proposées à propos des figures 3, 4 et 5 suivantes.

Dans le cas où il y a choc, le procédé réalise une étape e5) d'estimation des caractéristiques du choc, en particulier de l'instant de choc prédit, de la zone de choc et de la probabilité de choc, puis il les mémorise à l'étape e6), avant de supprimer la particule k considérée à l'étape e7) et poursuit la simulation avec la particule suivante k+1 jusqu'à la $N_i^{ème}$ particule.

Dans le cas d'une sortie de la zone de choc, sans qu'il y ait eu choc, le procédé mémorise également les caractéristiques de la trajectoire k à l'étape e6) avant de la supprimer à l'étape e7) et poursuit la simulation avec la particule suivante k+1 jusqu'à la $N_i^{ème}$ particule, comme dans le cas précédent.

Dans le cas où il n'y a pas choc, le procédé vérifie à l'étape e8) que la simulation n'est pas terminée, donc que l'instant $t_i$ de la simulation n'est pas égal à $t_0+ \Delta T$, $\Delta T$ étant la limite de la simulation. Si la simulation est terminée sans choc, elle se poursuit encore par la mémorisation de la dernière trajectoire et sa suppression, comme dans les deux cas précédents.

Dans le cas où il n'y a pas choc et que la simulation n'est pas terminée, la particule k a donc survécu et le procédé calcule à l'étape e9) la valeur de l'importance $I_{i,k}$ associée à son nouvel état à l'instant $t_i$ dans l'espace d'état, ainsi que le rapport $\beta_{i,k}$ entre l'importance de cette particule k à l'instant $t_i$ et sa valeur à l'instant $t_{i-1}$ précédent. Ce rapport $\beta_{i,k}$ permet de mesurer l'évolution de l'importance de la particule k considérée, c'est pourquoi sa valeur est ensuite comparée à 1 à l'étape e10). Si le rapport $\beta_{i,k}$ est égal à 1, cette trajectoire ne présente pas un intérêt grandissant et le procédé passe à la trajectoire simulée suivante k + 1. Si le rapport $\beta_{i,k}$ est inférieur à 1, le procédé applique une étape e11) de stratégie de « roulette russe » supprimant aléatoirement la particule qui est sans intérêt. Ainsi, soit la particule k est supprimée à l'étape e7), soit elle survit et un nouveau poids $p_k$ lui est affecté à l'étape e12).

Si le rapport $\beta_{i,k}$ est supérieur à 1, le procédé applique une étape e13) de stratégie de « splitting » qui démultiplie la particule considérée comme importante en un nombre n(k) de nouvelles particules affectées chacune d'un poids, différent de celui de la particule k importante, et qui seront traitées par la suite à l'instant $t_{i+1}$ suivant. Une nouvelle étape d'échantillonnage peut être nécessaire pour garder un nombre de particules raisonnable.

Les particules issues des stratégies de « roulette russe » ou de « splitting » seront traitées au pas de temps suivant et celles qui se terminent par un impact seront stockées et utilisées pour les statistiques. Leurs poids seront stockés jusqu'à leur suppression.

Lorsque la simulation vérifie à l'étape e14) qu'elle a considéré toutes les $N_i$ particules, elle vérifie qu'il y aura des particules à traiter au pas de temps suivant, donc que le nombre $N_{i+1}$ est positif, à l'étape e15). En effet, si par exemple toutes les particules aboutissent à des chocs à l'instant $t_i$ ou à des instants précédents, il n'y aura plus de particules à traiter au pas de temps suivant $t_{i+1}$, donc il n'y aura plus à simuler de trajectoire. Ensuite, le procédé estime la probabilité de choc et les caractéristiques du choc éventuel à partir des statistiques sur les résultats mémorisés, à l'étape e16) finale. Pour estimer la probabilité de choc $P_{choc}$ entre les instants $t_0$ et $t_0+\Delta T$, le procédé fait la somme des poids affectant les particules pour lesquelles la simulation se termine par un choc.

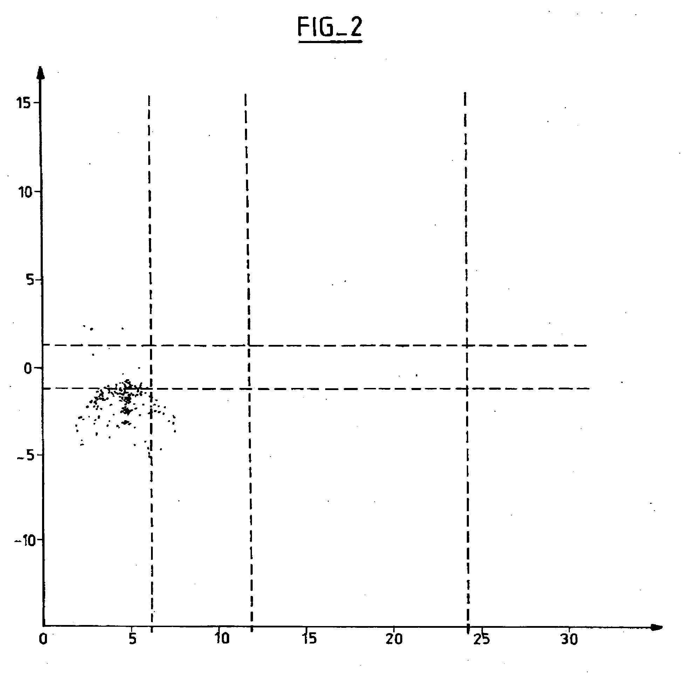

La figure 2 est un exemple de simulation de Monte-Carlo, avec un nombre N de particules, de l'ordre de 250, dans le repère du véhicule, dont l'origine 0 est le centre de la zone de choc au milieu du pare-choc du véhicule, l'axe des abscisses Ox est dirigé dans le plan de la route vers l'avant du véhicule et l'axe des ordonnées Oy, également compris dans le plan de la route, est dirigé de droite à gauche du véhicule, comme le montre la figure 3 qui est une vue schématique de dessus d'un véhicule A et d'un piéton P. Pour des raisons de simplicité et de reproductibilité, les prédictions de trajectoires se font dans le repère orthonormé instantané du véhicule et les tests de choc nécessitent de transposer la position du piéton dans ce repère de la face avant du véhicule. Concernant la trajectoire relative du piéton par rapport au véhicule, la vitesse de ce dernier est généralement grande devant celle du piéton, et le procédé considère que, dans ce repère de la face avant du véhicule, l'abscisse du piéton est toujours décroissante dans le temps.

L'issue d'une trajectoire de piéton, dans le repère relatif du véhicule peut être de trois sortes :

- il y a choc entre le véhicule et le piéton, à l'instant $t_{choc}$ et le procédé arrête la simulation pour la particule concernée ;
- il n'y a pas de choc car le piéton passe derrière la zone de choc à partir de l'instant $t_{sortie}$, de sorte que le procédé arrête la simulation à cet instant puisque le piéton ne risque plus d'être heurté, son abscisse devenant négative ;
- il n'y a pas de choc mais l'abscisse de la position relative du piéton reste positive dans le repère du véhicule, aussi le procédé continue la phase de simulation de la trajectoire du piéton jusqu'à sa limite $\Delta T$.

La durée $\Delta T$ d'une prédiction de choc dépend donc de la proportion de cas appartenant à ces trois types d'issues de trajectoires. Les durées de trajectoires s'achevant par les deux premières issues, avec des abscisses voisines de 0, sont sensiblement égales si on admet que le mouvement longitudinal relatif du piéton selon l'axe Ox est essentiellement dû au déplacement du véhicule. Dans ces deux cas, la durée de vie r de la particule est fonction respectivement des instants $t_{choc}$ et $t_{sortie}$, qui sont égaux au quotient de la distance longitudinale x relative par la norme de la vitesse $V_{veh}$ du véhicule :

$$\tau = \frac{x}{V_{veh}}$$

Plus la valeur de $\tau$ est petite, plus le nombre N de particules peut être grand, à temps de calcul global égal.

Pour le troisième cas dans lequel le calcul de la trajectoire se fait sur toute la durée $\Delta T$, il ne requiert pas de calcul avec un pas temporel $\delta t$ plus fin, donc n'est pas coûteux en temps de calcul.

L'invention concerne uniquement la prédiction des chocs frontaux entre un piéton et la face avant du véhicule qui est modélisée par un segment ayant pour dimension la largeur L du véhicule, comme l'a montré la figure 3. Le piéton P est assimilé à un cylindre de diamètre 2R égal à la largeur maximale d'un piéton moyen et de même hauteur que ce piéton moyen, de sorte qu'il est possible de définir une zone de choc véhicule/piéton correspondant à une intersection entre un segment représentatif de la face avant du véhicule A et un disque représentatif de l'enveloppe du piéton P, comme le montre la figure 4 qui est un exemple de modélisation géométrique d'un choc frontal entre un véhicule et un piéton. Par exemple, le diamètre 2R est égal à 60 cm.

Trois situations sont mises en évidence :

- il y a choc quand la plus grande partie du piéton est recouverte par l'avant du véhicule (zone zébrée C),
- il n'y a pas de choc quand il n'y a pas de recouvrement entre le modèle du piéton et la face avant,
- il y a ambiguïté choc/non choc quand moins de la moitié du cercle englobant le piéton est coupée par la face avant (zone en pointillés B).

A l'intérieur de la zone d'ambiguïté, il est possible de définir une fonction, du type gravité de l'impact, qui passerait de manière continue de 0 (pas d'impact) à 1. La notion de choc correspondrait alors au franchissement d'un seuil à définir. Cette possibilité de pondérer l'importance ou la gravité d'un impact peut s'avérer intéressante lors de l'évaluation de systèmes réels : a priori, prédire un choc ayant lieu au milieu de la face avant du véhicule est plus simple qu'un choc avant ayant lieu sur un des bords gauche ou droit.

Deux variantes de définitions de la zone de choc sont représentées sur les figures 5 et 4, correspondant à la description respectivement de la zone de choc simple et de la zone de choc « fine ». La zone de choc simple $Z_s$, sans zone d'ambiguïté, est un rectangle de largeur égale à 2R et de longueur égale à la somme de la largeur L du véhicule et du diamètre 2R du modèle du piéton. La zone de choc « fine » $Z_f$ est l'association d'un rectangle, de longueur L et de largeur 2R, et de deux demi-cercles de rayon R à chaque extrémité.

Le test de prédiction de choc entre un véhicule et un piéton consiste à comparer la probabilité de choc calculée à un seuil, compris généralement entre 70 et 95 %. Si p est la probabilité de choc, la variance de l'estimation de cette probabilité par simulation de Monte Carlo classique vaut p.(1-p)/N, N étant le nombre de particules tirées et cette variance au voisinage du seuil de détection est relativement importante. Selon une caractéristique essentielle de l'invention, le procédé définit des régions ou zones d'importance telles que, lorsqu'une particule entre dans une zone d'importance plus grande, elle est démultipliée, mais au contraire quand elle rentre dans une région d'importance plus faible, elle peut être éliminée aléatoirement par « roulette russe ». Différents critères sur les situations entre un véhicule et un piéton, dans le repère de la face avant, aboutissent à différents découpages des zones d'importance.

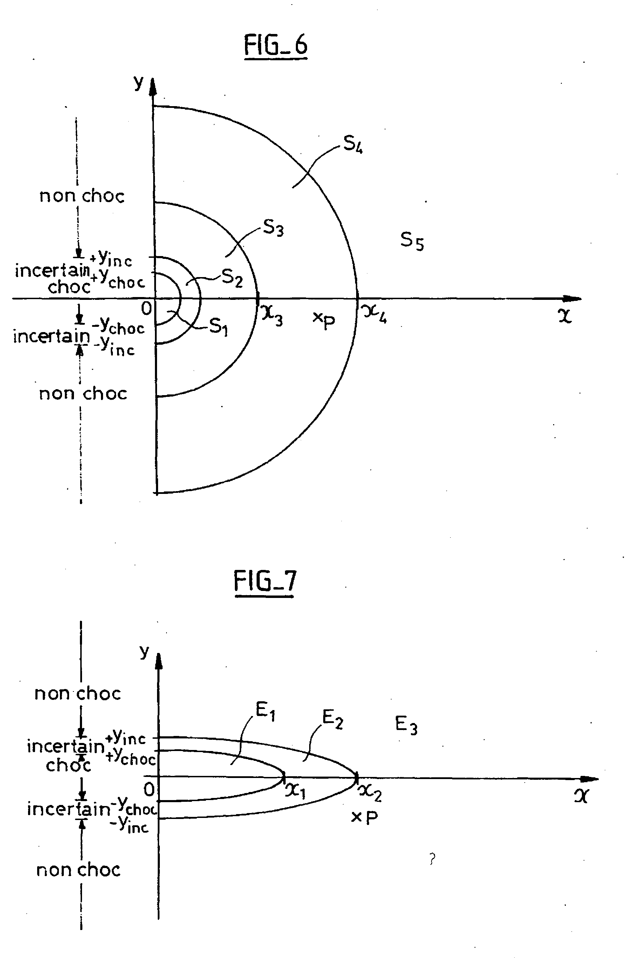

Les figures 6 à 11 sont des exemples non limitatifs de zones d'importance dans le cas d'un mouvement rectiligne uniforme du véhicule, l'espace devant le véhicule étant découpé par exemple selon trois zones liées à la gravité prévisionnelle du choc : il y a choc, non choc, ou le choc est incertain, entre autres.

L'exemple de la figure 6 montre un découpage de l'espace devant le véhicule, selon le repère orthonormé instantané attaché à l'avant du véhicule, réalisé à partir de la distance relative entre le véhicule et le piéton seule sans tenir compte de leur vitesse relative, ce qui entraîne des zones en forme d'anneaux circulaires, centrés sur le milieu du pare-choc du véhicule et dont le diamètre est constitué du pare-choc. La première zone semi-circulaire $S_1$ comprise entre les ordonnées $+Y_{choc}$ et $-Y_{choc}$ correspondant aux deux extrémités du pare-choc du véhicule, présente une grande importance $I_1$ car le choc y est certain. La deuxième zone $S_2$ annulaire, consécutive à la première $S_1$ et comprise entre les ordonnées $+Y_{inc}$ et $-Y_{inc}$ correspondant à un choc incertain, présente une importance $I_2$ maximale. La troisième zone $S_3$ annulaire, de rayon extérieur égal à $x_3$, correspondant à une abscisse du piéton P égale au produit de la vitesse du véhicule $V_{veh}$ par 0.5 seconde par exemple ($x_3$=0.5*$V_{veh}$), présente une importance $I_3$ inférieure à $I_1$. On peut également définir une quatrième zone $S_4$ d'importance $I_4$ encore plus petite, de rayon extérieur égal à $x_4$, correspondant à une abscisse du piéton égale au produit de la vitesse du véhicule par 1 seconde ($x_4$=1*$V_{veh}$) et une cinquième zone $S_5$ correspondant au reste du demi plan des abscisses positives.

Si on suppose que la composante longitudinale de la vitesse relative est due au véhicule et que sa composante latérale est assimilée à celle du piéton, les zones d'importance sont découpées selon des ellipses, centrées sur le milieu du pare-choc du véhicule, comme le montre la figure 7. La première ellipse $E_1$ a pour demi petit axe l'ordonnée $Y_{choc}$ et pour demi grand axe le produit de $Y_{choc}$ par le rapport des vitesses du véhicule et du piéton : $Y_{choc}$ * $V_{veh}/V_{pie}$. La deuxième ellipse $E_2$ a pour demi petit axe l'ordonnée $Y_{inc}$ et pour demi grand axe le produit de $Y_{inc}$ par le rapport des vitesses du véhicule et du piéton : $Y_{choc}$ * $V_{veh}/V_{pie}$ et présente une importance maximale. Une troisième zone $E_3$ correspond au reste du demi plan des abscisses positives.

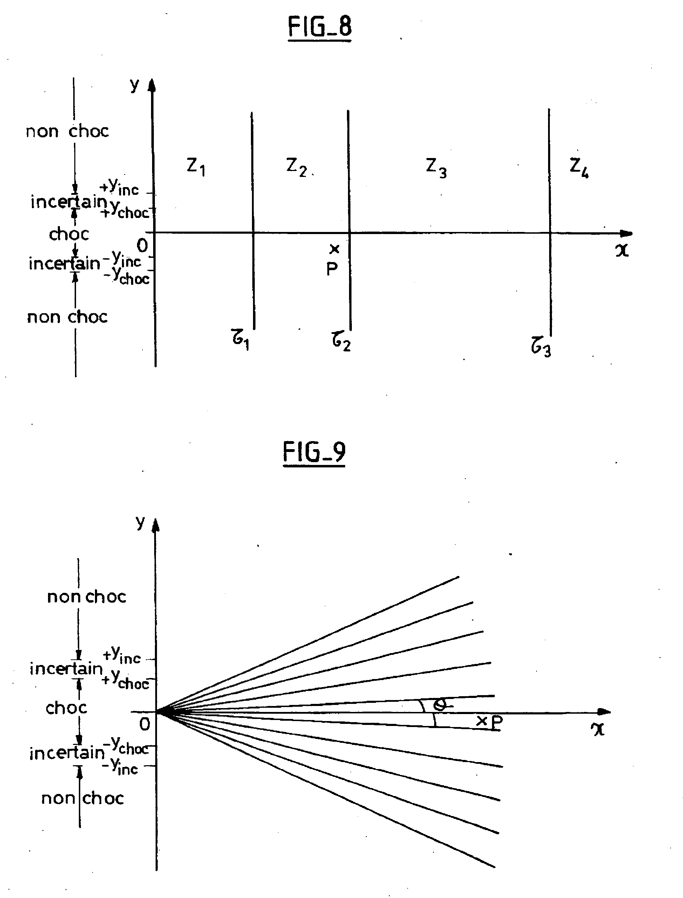

Pour adapter les conditions sur la distance en fonction de la vitesse, le procédé propose (figure 8) un découpage de l'espace devant le véhicule, selon le repère orthonormé instantané attaché à l'avant du véhicule, réalisé selon la valeur de la durée de vie r de la particule à chaque instant $t_i$ de la simulation. Ce temps r est aussi appelé temps avant dépassement, nécessaire pour que la position longitudinale du piéton soit au niveau de la face avant du véhicule. Plus cette durée de vie r est courte, plus l'importance de la zone est grande. Dans ce cas, seules la position longitudinale x du piéton et sa vitesse $V_p$ sont prises en compte. Ainsi, dans la figure 8, les zones d'importance ont la forme de bandes parallèles à l'axe des ordonnées, la zone $Z_1$ de plus grande importance correspond à une durée de vie $\tau_1$ comprise entre 0 et 0,5 seconde et se trouve la plus proche du véhicule, une deuxième zone $Z_2$ d'importance moins grande correspond à une durée de vie $\tau_2$ comprise entre 0,5 et 1 seconde, une troisième zone $Z_3$ est comprise entre 1 et 2 secondes de durée de vie $\tau_3$, et une dernière zone $Z_4$ correspond au reste du demi plan des abscisses positives.

Dans l'exemple de la figure 9, le découpage de l'espace se fait en tenant compte de la position angulaire du piéton dans le plan défini par les axes Ox et Oy du repère du véhicule, obtenue avec le rapport de sa position latérale y sur sa position-longitudinale x. Les zones d'importance sont définies par des secteurs d'origine 0, faisant par rapport à l'axe Ox des abscisses, un angle θ égal à l'arc tangente du rapport entre ces deux positions :

$$\theta \ = \ arc \ tan \left( \frac{y}{x} \right)$$. Plus l'angle est grand, plus l'importance est petite et un grand nombre de secteurs permet de se rapprocher d'une variation continue de l'importance.

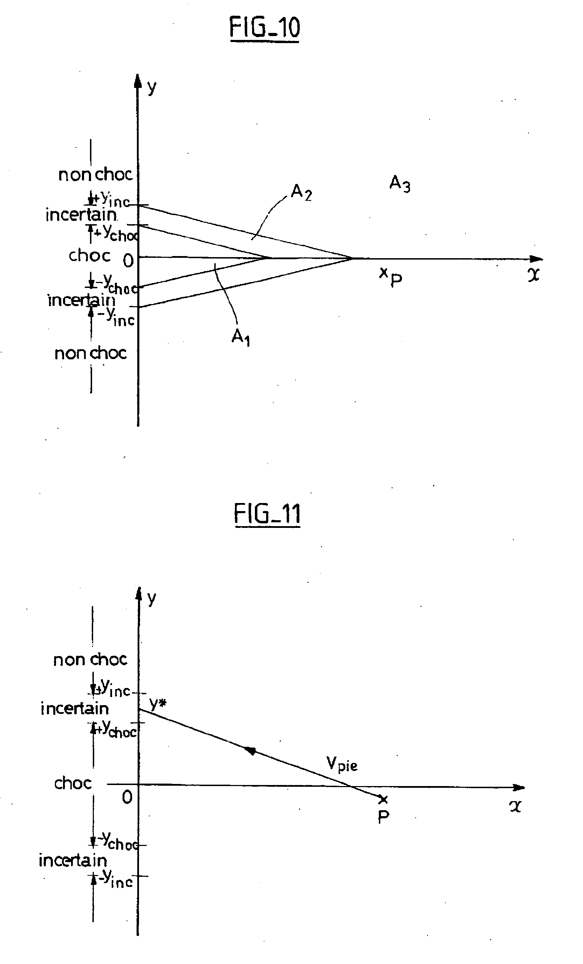

Dans l'exemple de la figure 10, le découpage de l'espace se fait à partir de la direction de la vitesse relative du piéton par rapport au véhicule, obtenue soit par l'arc tangente du rapport entre sa vitesse longitudinale et sa vitesse latérale, soit par l'arc tangente du rapport entre la vitesse du piéton $V_{pie}$ et celle du véhicule $V_{veh}$ :

$$\alpha = \arctan\left( \frac{V_{pie}}{V_{veh}} \right)$$

Les zones d'importance sont définies par des triangles isocèles, de hauteur $h_1$ sur l'axe 0x des abscisses et de base sur l'axe Oy des ordonnées et d'angle α au sommet défini par l'arc tangente du rapport entre la vitesse du piéton $V_{pie}$ et celle du véhicule $V_{veh}$ :

$$\alpha = \arctan\left( \frac{V_{pie}}{V_{veh}} \right).$$

Une première zone $A_1$ a une base égale à 2 $Y_{choc}$ et pour hauteur $h_2$ le produit de $Y_{choc}$ par le rapport de la vitesse du véhicule sur celle du piéton, faisant par rapport à l'axe Ox, un angle α défini par :

$$\alpha = \arctan\left( \frac{V_{pie}}{V_{veh}} \right).$$ Son importance $I_1$ est grande.

Une deuxième zone $A_2$ a une base égale à 2 $Y_{inc}$ et pour hauteur le produit $Y_{inc}$ par le rapport de la vitesse du véhicule sur celle du piéton, et son importance est maximale. Et une troisième zone $A_3$ correspond au reste du demi plan des abscisses positives, avec une importance inférieure à celle de la première zone.

Ces critères précédemment décrits n'étant valides que sur une partie des cas rencontrés, une combinaison de ces découpages d'importance est préférable. Par exemple, le procédé utilise la prédiction déterministe, ce qui revient à utiliser simultanément la durée de vie r de la particule et l'ordonnée y* qui estime la position latérale du piéton P quand sa position longitudinale sera nulle et qui est définie, comme le montre la figure 11, par :

$$y^{*} = y + \tau * V_{y}^{pie}$$

$V_y^{pie}$ étant la vitesse latérale du piéton.

Trois niveaux d'importance peuvent être définis en fonction de la valeur absolue de y* :

-   si $|y^*| < y_{choc}$, l'importance est grande,
-   si $y_{choc} \le |y^*| \le y_{inc}$, l'importance est maximale,
-   si $y_{inc} < |y^*|$, l'importance est moindre, et inférieure à la première.

Pour réaliser ce procédé de prédiction de choc entre un véhicule et un piéton détecté, le système de mise en oeuvre, embarqué sur le véhicule, comporte des moyens de détection d'obstacles dans l'environnement du véhicule, associés à des moyens d'estimation de leur position et de leur vitesse, reliés à des moyens de prédiction de choc véhicule/piéton, qui reçoivent par ailleurs des informations sur la dynamique du véhicule équipé dudit système de la part de capteurs connectés aux commandes du véhicule, ces moyens de prédiction de choc associant à chaque obstacle détecté une probabilité de choc, un temps avant choc, une zone de choc prévue et éventuellement une probabilité de vitesse au choc, qu'ils envoient à des moyens de sélection de la contre-mesure optimale que le système doit appliquer en urgence pour protéger le piéton repéré.

Grâce au modèle de piéton à quatre états, décrit dans la demande de brevet français FR 03 15548, qui est déterministe par morceaux, lorsque les composantes aléatoires de la trajectoire ont été obtenues, la trajectoire du piéton, donc sa position en un point donné, peut être exprimée de façon analytique. Cette propriété permet de réduire sensiblement le nombre de points de passage à générer pendant la durée ΔT de la prédiction de trajectoire et donc le nombre de tests de choc à effectuer. Ces spécificités du modèle piéton combinées à une méthode de Monte Carlo intelligent avec réduction de variance par « splitting » ou « roulette russe » permet une utilisation en temps réel, tout en gardant les qualités du modèle qui assurent d'excellentes performances en termes de taux de prédiction correcte et de fausses alarmes. Contrairement aux solutions antérieures, le procédé selon l'invention nécessite moins d'informations, la distance du piéton au véhicule seulement par exemple, sans la direction de sa vitesse en particulier. Cela réduit la charge et la puissance, donc la taille et le coût du calculateur électronique dédié, ainsi que celui des capteurs associés.

La prédiction de choc associée à l'estimation du temps avant impact prédit, dans un système de protection des piétons de type pré crash, permet que le conducteur et/ou le piéton apprécient la gravité de la situation, sinon des contre-mesures sont déclenchées automatiquement. Le conducteur et/ou le piéton peuvent aussi être alertés afin qu'ils déclenchent une manoeuvre d'évitement ou de réduction de la vitesse d'impact par un changement de trajectoire, un freinage d'urgence ou autres.

**Revendications**

1.  Procédé de prédiction de choc entre un véhicule et un piéton mobile détecté, comprenant une phase de génération de N particules représentant des couples de trajectoires de véhicule et de piéton, ayant pour origine la situation dont les caractéristiques de choc sont à évaluer, à partir d'un modèle de véhicule et d'un modèle de piéton à plusieurs états discrets, des positions initiales du véhicule et du piéton et d'informations sur leurs états cinématiques respectifs, suivie d'une phase d'évaluation de l'issue de chaque particule, **caractérisé en ce que** l'espace des états des particules est découpé en zones d'importance variable, l'importance étant définie par une valeur numérique directement liée à l'intérêt accordé à chaque particule et dépendant de son état cinématique présent, et **en ce qu'**en cas de non choc prédit, le procédé calcule le rapport (β) entre l'importance de la particule à l'instant présent et son importance à l'instant précédent pour décider, dans le cas d'une particule dont l'importance croît, de la démultiplier en un nombre entier n, supérieur à 1, de particules affectées chacune d'un nouveau poids et, dans le cas d'une particule dont l'importance décroît, de la supprimer en fonction dudit rapport d'importance, sa probabilité de survie étant égale au rapport d'importance (β), l'estimation de la probabilité de choc et des caractéristiques dudit choc prédit étant obtenue ensuite par l'application de statistiques sur les issues de l'ensemble des N particules.

2.  Procédé de prédiction de choc selon la revendication 1, **caractérisé en ce que** le découpage de l'espace en zones d'importance devant le véhicule, selon un repère orthonormé instantané attaché à l'avant du véhicule, est réalisé à partir de la distance relative entre le véhicule et le piéton, définissant les zones d'importance en forme d'anneaux circulaires, centrés sur le milieu du pare-choc du véhicule et dont le diamètre est le pare-choc.

**3.** Procédé de prédiction de choc selon la revendication 1, **caractérisé en ce que** le découpage de l'espace en zones d'importance devant le véhicule, selon un repère orthonormé instantané attaché à l'avant du véhicule, est réalisé à partir de la composante longitudinale de la vitesse relative due au véhicule et de sa composante latérale qui est assimilée à celle du piéton, définissant les zones d'importance en forme d'ellipses, centrées sur le milieu du pare-choc du véhicule, de demi petit axe sur l'axe des ordonnées et de demi grand axe sur l'axe des abscisses.

**4.** Procédé de prédiction de choc selon la revendication 1, **caractérisé en ce que** le découpage de l'espace en zones d'importance devant le véhicule, selon un repère orthonormé instantané attaché à l'avant du véhicule, est réalisé selon la valeur de la durée de vie ($\tau$) de la particule, ou temps avant dépassement, nécessaire pour que la position longitudinale du piéton soit au niveau de la face avant du véhicule, à chaque instant ($t_i$) de la simulation, et en ce plus cette durée de vie ($\tau$) est courte, plus l'importance de la zone est grande, seules la position longitudinale ($x$) du piéton et sa vitesse ($V_p$) étant alors prises en compte, définissant les zones d'importance en forme de bandes parallèles à l'axe des ordonnées.

**5.** Procédé de prédiction de choc selon la revendication 1, **caractérisé en ce que** le découpage de l'espace en zones d'importance devant le véhicule, selon un repère orthonormé instantané attaché à l'avant du véhicule, est réalisé en tenant compte de la position angulaire du piéton dans le plan défini par les axes (Ox et Oy) du repère du véhicule, obtenue avec le rapport de sa position latérale ($y$) sur sa position longitudinale ($x$), définissant les zones d'importance en forme de secteurs d'origine (0), faisant par rapport à l'axe (Ox) des abscisses, un angle ($\theta$) égal à l'arc tangente du rapport entre ces deux positions :

$$\theta = \arctan\left(\frac{y}{x}\right).$$

**6.** Procédé de prédiction de choc selon la revendication 1, **caractérisé en ce que** le découpage de l'espace en zones d'importance devant le véhicule, selon un repère orthonormé instantané attaché à l'avant du véhicule, est réalisé à partir de la direction de la vitesse relative du piéton par rapport au véhicule, obtenue soit par l'arc tangente du rapport entre sa vitesse longitudinale et sa vitesse latérale, soit par l'arc tangente du rapport entre la vitesse du piéton ($V_{pie}$) et celle du véhicule ($V_{veh}$) :

$$\alpha = \arctan\left(\frac{V_{pie}}{V_{veh}}\right)$$

définissant les zones d'importance en forme de triangles isocèles, de hauteur sur l'axe (0x) des abscisses et de base sur l'axe (0y) des ordonnées, et d'angle ($\alpha$) au sommet défini par l'arc tangente du rapport entre la vitesse du piéton et celle du véhicule :

$$\alpha = \arctan\left(\frac{V_{pie}}{V_{veh}}\right).$$

**7.** Procédé de prédiction de choc selon la revendication 1, **caractérisé en ce que** le découpage de l'espace en zones d'importance devant le véhicule, selon un repère orthonormé instantané attaché à l'avant du véhicule, est réalisé à partir de la prédiction déterministe, qui utilise simultanément une durée de vie ($\tau$) de la particule et l'ordonnée ($y^*$) qui estime la position latérale ($y$) du piéton quand sa position longitudinale sera nulle et qui est définie, avec la vitesse latérale du piéton ($V_y^{pie}$), par :

$$y^* = y + \tau * V_y^{pie}$$

trois niveaux d'importance étant définis en fonction de la valeur absolue de $y^*$ :

- si $|y^*| < y_{choc}$, l'importance est grande,
- si $y_{choc} \leq |y^*| \leq y_{inc}$, l'importance est maximale,
- si $y_{inc} < |y^*|$, l'importance est moindre, inférieure à la première.

**8.** Procédé de prédiction de choc selon l'une des revendications 1 à 7, **caractérisé en ce qu'**il comporte les étapes suivantes :

- la détermination de l'état cinématique initial du véhicule [$E_v(t_o)$] et du piéton [$E_p(t_o)$], suivie de la génération d'un nombre ($N_i$) de particules, chacune affectée d'un poids ($p_i$) et correspondant à un couple de trajectoires simulées pour le véhicule et le piéton à l'instant ($t_i$), et pour chacune desquelles un état cinématique [$E_v(t_i)$ et $E_P(t_i)$] est simulé qui est ensuite comparé à l'état initial,
- dans le cas où il y a choc, l'estimation et la mémorisation des caractéristiques du choc, avant de supprimer la particule considérée et de poursuivre la simulation avec la particule sui-

vante jusqu'à la $N_i^{ème}$ particule,

- dans le cas d'une sortie de la zone de choc, sans qu'il y ait eu choc, la mémorisation des caractéristiques de la trajectoire considérée avant sa suppression et la poursuite de la simulation avec la particule suivante jusqu'à la $N_i^{ème}$ particule,

- dans le cas où il n'y à pas choc, la vérification que la simulation n'est pas terminée, par contre si la simulation est terminée sans choc, elle se poursuit encore par la mémorisation de la dernière trajectoire et sa suppression,

- dans le cas où il n'y a pas choc, la particule considérée ayant survécu, le calcul du rapport ($\beta_{i,k}$) entre la valeur de l'importance ($I_{i,k}$) associée à son nouvel état à l'instant ($t_i$) dans l'espace d'état et sa valeur à l'instant ($t_{i-1}$) précédent, qui est ensuite comparé à 1 :

> • si le rapport $\beta_{i,k}$ est égal à 1, cette trajectoire ne présente pas un intérêt grandissant et le procédé passe à la trajectoire simulée suivante,
> • si le rapport $\beta_{i,k}$ est inférieur à 1, la suppression aléatoire par une étape de « roulette russe » de la particule qui est sans intérêt, avec attribution d'un nouveau poids ($p_k$) si elle survit,
> • si le rapport $\beta_{i,k}$ est supérieur à 1, la démultiplication par une étape de « splitting » de la particule considérée comme importante en un nombre [$n(k)$] de nouvelles particules affectées chacune d'un poids, différent de celui de la particule importante, et qui seront traitées à l'instant ($t_{i+1}$) suivant,

- après la vérification que toutes les $N_i$ particules ont été traitées, l'estimation de la probabilité de choc et des caractéristiques du choc éventuel à partir des statistiques sur les poids mémorisés.

**9.** Système de mise en oeuvre du procédé de prédiction de choc entre un véhicule et un piéton mobile détecté, embarqué sur le véhicule, selon l'une des revendications 1 à 8, **caractérisé en ce qu'**il comporte des moyens de détection d'obstacles dans l'environnement du véhicule qui sont associés à des moyens d'estimation de leur position et de leur vitesse et qui sont reliés à des moyens de prédiction de choc véhicule/piéton, lesdits moyens de prédiction recevant par ailleurs des informations sur la dynamique du véhicule équipé dudit système de la part de capteurs connectés aux commandes du véhicule, et associant à chaque obstacle détecté une probabilité de choc, un temps avant choc, une zone de choc prévue et éventuellement une probabilité de vitesse au choc, lesdites informations associées à chaque obstacle étant ensuite envoyées à des moyens de sélection de la contre-mesure optimale que le système doit appliquer en urgence pour protéger le piéton repéré.

**10.** Système de mise en oeuvre selon la revendication 9, **caractérisé en ce que** les moyens de prédiction de choc associent à chaque obstacle détecté une vitesse de choc.

**Claims**

**1.** Method of predicting impact between a vehicle and a detected moving pedestrian, comprising a phase of generating N particles representing pairs of vehicle and pedestrian trajectories, having as origin the situation whose impact characteristics are to be evaluated, on the basis of a vehicle model and of a pedestrian model with several discrete states, of the initial positions of the vehicle and of the pedestrian and of information about their respective kinematic states, followed by a phase of evaluating the outcome of each particle, **characterized in that** the particle state space is sliced into zones of variable significance, the significance being defined by a numerical value directly related to the interest accorded to each particle and dependent on its present kinematic state, and **in that** in the event of predicted non-impact, the method calculates the ratio ($\beta$) of the significance of the particle at the present instant to its significance at the previous instant so as to decide, in the case of a particle whose significance is increasing, to scale it down into an integer number n, greater than 1, of particles each assigned a new weight and, in the case of a particle whose significance decreases, to eliminate it as a function of said significance ratio, its probability of survival being equal to the significance ratio ($\beta$), the estimation of the probability of impact and characteristics of said predicted impact being obtained thereafter by the application of statistics on the outcomes of the set of N particles.

**2.** Method of predicting impact according to Claim 1, **characterized in that** the slicing of the space into significance zones in front of the vehicle, according to an instantaneous orthonormal reference frame tied to the front of the vehicle, is carried out on the basis of the relative distance between the vehicle and the pedestrian, defining the significance zones in the form of circular annuli, centered on the middle of the bumper of the vehicle and whose diameter is the bumper.

**3.** Method of predicting impact according to Claim 1, **characterized in that** the slicing of the space into significance zones in front of the vehicle, according to an instantaneous orthonormal reference frame tied to the front of the vehicle, is carried out on the basis of the longitudinal component of the relative speed due to the vehicle and of its lateral component which is regarded as that of the pedestrian, defining the significance zones in the form of ellipses, centered on the middle of the bumper of the vehicle, with semi minor axis on the ordinate axis and with semi major axis on the abscissa axis.

**4.** Method of predicting impact according to Claim 1, **characterized in that** the slicing of the space into significance zones in front of the vehicle, according to an instantaneous orthonormal reference frame tied to the front of the vehicle, is carried out according to the value of the lifetime ($\tau$) of the particle, or time before overtaking, necessary so that the longitudinal position of the pedestrian is level with the front face of the vehicle, at each instant ($t_i$) of the simulation, and **in that** the shorter this lifetime ($\tau$), the higher the significance of the zone, only the longitudinal position (x) of the pedestrian and his speed ($V_p$) being then taken into account, defining the significance zones in the form of bands parallel to the ordinate axis.

**5.** Method of predicting impact according to Claim 1, **characterized in that** the slicing of the space into significance zones in front of the vehicle, according to an instantaneous orthonormal reference frame tied to the front of the vehicle, is carried out by taking account of the angular position of the pedestrian in the plane defined by the axes (Ox and Oy) of the reference frame of the vehicle, obtained with the ratio of his lateral position (y) to his longitudinal position (x), defining the significance zones in the form of sectors of origin (0), making with respect to the abscissa axis (Ox), an angle ($\theta$) equal to the arc tangent of the ratio of these two positions:

$$\theta = \text{arc tan } (y/x).$$

**6.** Method of predicting impact according to Claim 1, **characterized in that** the slicing of the space into significance zones in front of the vehicle, according to an instantaneous orthonormal reference frame tied to the front of the vehicle, is carried out on the basis of the direction of the relative speed of the pedestrian with respect to the vehicle, obtained either by the arc tangent of the ratio of his longitudinal speed to his lateral speed, or by the arc tangent of the ratio of the speed of the pedestrian ($V_{ped}$) to that of the vehicle ($V_{veh}$):

$$\alpha = \text{arctan } (V_{ped}/V_{veh})$$

defining the significance zones in the form of isosceles triangles, of height on the abscissa axis (Ox) and of base on the ordinate axis (Oy), and of angle ($\alpha$) at the vertex defined by the arc tangent of the ratio of the speed of the pedestrian to that of the vehicle:

$$\alpha = \text{arctan } (V_{ped}/V_{veh}).$$

**7.** Method of predicting impact according to Claim 1, **characterized in that** the slicing of the space into significance zones ahead of the vehicle, according to an instantaneous orthonormal reference frame tied to the front of the vehicle, is carried out on the basis of deterministic prediction, which simultaneously uses a lifetime ($\tau$) of the particle and the ordinate ($y^*$) which estimates the lateral position (y) of the pedestrian when his longitudinal position will be zero and which is defined, with the lateral speed of the pedestrian ($V_y{}^{ped}$), by:

$$y^* = y + \tau * V_y{}^{ped}$$

three significance levels being defined as a function of the absolute value of $y^*$:

- if $|y^*| < y_{impact}$, the significance is high,
- if $y_{impact} \leq |y^*| \leq Y_{unc}$, the significance is maximal,
- if $Y_{unc} < |y^*|$, the significance is less, lower than the first.

**8.** Method of predicting impact according to one of Claims 1 to 7, **characterized in that** it comprises the following steps:

- the determination of the initial kinematic state of the vehicle [$E_v(t_0)$] and of the pedestrian [$E_p(t_0)$], followed by the generation of a number ($N_i$) of particles, each assigned a weight ($p_i$) and corresponding to a pair of simulated trajectories for the vehicle and the pedestrian at the instant ($t_i$), and for each of which a kinematic state [$E_v(t_i)$ and $E_p(t_i)$] is simulated which is thereafter compared with the initial state,
- in the case where there is impact, the estimation and the storage of the characteristics of the impact, before eliminating the particle considered and continuing the simulation with the following particle up to the $N_i{}^{th}$ particle,
- in the case of an exit from the impact zone, without there having been any impact, the storage of the characteristics of the trajectory considered before its elimination and the continuation of the simulation with the following particle up to the $N_i^{th}$ particle,

- in the case where there is no impact, the verification that the simulation has not terminated, on the other hand if the simulation has terminated without impact, it is continued again with the storage of the last trajectory and its elimination,
- in the case where there is no impact, the particle considered having survived, the calculation of the ratio ($\beta_{i,k}$) of the value of the significance ($I_{i,k}$) associated with its new state at the instant ($t_i$) in the state space to its value at the previous instant ($t_{i-1}$), which is thereafter compared with 1:

• if the ratio $\beta_{i,k}$ is equal to 1, this trajectory does not exhibit a growing interest and the method passes to the following simulated trajectory,
• if the ratio $\beta_{i,k}$ is less than 1, the random elimination by a step of "Russian roulette" of the particle which is of no interest, with allocation of a new weight ($p_k$) if it survives,
• if the ratio $\beta_{i,k}$ is greater than 1, the scaledown by a step of "splitting" of the particle considered to be significant into a number [n(k)] of new particles each assigned a weight, different from that of the significant particle, which particles will be processed at the following instant ($t_{i+1}$),

- after the verification that all the $N_i$ particles have been processed, the estimation of the probability of impact and of the characteristics of the possible impact on the basis of the statistics on the weights stored.

9. System for implementing the method of predicting impact between a vehicle and a detected moving pedestrian, carried on board the vehicle, according to one of Claims 1 to 8, **characterized in that** it comprises means for detecting obstacles in the environment of the vehicle which are associated with means for estimating their position and their speed and which are linked to vehicle/pedestrian impact prediction means, said prediction means additionally receiving information about the dynamics of the vehicle equipped with said system on the part of sensors connected to the controls of the vehicle, and associating with each detected obstacle a probability of impact, a time before impact, an envisaged impact zone and possibly a probability of speed on impact, said information associated with each obstacle being thereafter dispatched to means for selecting the optimal counter-measure that the system must apply in an emergency to protect the pinpointed pedestrian.

10. Implementation system according to Claim 9, **char-**

**acterized in that** the impact prediction means associate with each detected obstacle an impact speed.

## Patentansprüche

1. Verfahren zur Vorhersage eines Zusammenstoßes zwischen einem Fahrzeug und einem erfassten mobilen Fußgänger, das eine Phase der Erzeugung von N Partikeln aufweist, die Paare von Fahrzeug- und Fußgänger-Trajektorien darstellen, die als Ursprung die Situation haben, deren Zusammenstoßmerkmale zu bewerten sind, ausgehend von einem Fahrzeugmodell und einem Fußgängermodell mit mehreren diskreten Zuständen, von den Ausgangspositionen des Fahrzeugs und des Fußgängers und von Informationen über ihren jeweiligen kinematischen Zustand, gefolgt von einer Phase der Bewertung des Ergebnisses jedes Partikels, **dadurch gekennzeichnet, dass** der Zustandsraum der Partikel in Zonen unterschiedlicher Bedeutung aufgeteilt wird, wobei die Bedeutung durch einen Zahlenwert definiert wird, der direkt mit der jedem Partikel zugemessenen Interesse verbunden ist und von seinem gegenwärtigen kinematischen Zustand abhängt, und dass in dem Fall, in dem kein Zusammenstoß vorhergesagt wird, das Verfahren das Verhältnis ($\beta$) zwischen der Bedeutung des Partikels im gegenwärtigen Zeitpunkt und seiner Bedeutung im vorhergehenden Zeitpunkt berechnet, um im Fall eines Partikels, dessen Bedeutung zunimmt, zu veranlassen, es in eine ganze Zahl n größer als 1 von Partikeln zu demultiplizieren, denen je ein neues Gewicht zugeteilt wird, und im Fall eines Partikels, dessen Bedeutung abnimmt, es in Abhängigkeit von dem Bedeutungsverhältnis zu beseitigen, wobei seine Überlebenswahrscheinlichkeit gleich dem Bedeutungsverhältnis ($\beta$) ist, wobei die Schätzung der Zusammenstoßwahrscheinlichkeit und der Merkmale des vorhergesagten Zusammenstoßes anschließend durch das Anwenden von Statistiken an die Ergebnisse der Gesamtheit der N Partikel erhalten wird.

2. Verfahren zur Zusammenstoßvorhersage nach Anspruch 1, **dadurch gekennzeichnet, dass** die Aufteilung des Raums in Bedeutungszonen vor dem Fahrzeug gemäß einem an der Vorderseite des Fahrzeugs befestigten, augenblicklichen orthonormierten Koordinatensystem ausgehend vom relativen Abstand zwischen dem Fahrzeug und dem Fußgänger durchgeführt wird, wobei die Bedeutungszonen in Form von Kreisringen definiert sind, die auf die Mitte der Stoßstange des Fahrzeugs zentriert sind und deren Durchmesser die Stoßstange ist.

3. Verfahren zur Zusammenstoßvorhersage nach Anspruch 1, **dadurch gekennzeichnet, dass** die Aufteilung des Raums in Bedeutungszonen vor dem Fahrzeug gemäß einem augenblicklichen orthonormierten Koordinatensystem, das an der Vorderseite des Fahrzeugs befestigt ist, ausgehend von der Längskomponente der relativen Geschwindigkeit, die auf das Fahrzeug zurückzuführen ist, und ihrer Seitenkomponente durchgeführt wird, die derjenigen des Fußgängers gleichgesetzt ist, wobei die Bedeutungszonen in Form von Ellipsen definiert werden, die auf die Mitte der Stoßstange des Fahrzeugs zentriert sind, mit einer kleinen Halbachse auf der Ordinatenachse und einer großen Halbachse auf der Abszissenachse.

4. Verfahren zur Zusammenstoßvorhersage nach Anspruch 1, **dadurch gekennzeichnet, dass** die Aufteilung des Raums in Bedeutungszonen vor dem Fahrzeug gemäß einem augenblicklichen orthonormierten Koordinatensystem, das an der Vorderseite des Fahrzeugs befestigt ist, gemäß dem Wert der Lebensdauer ($\tau$) des Partikels oder der Zeit vor Überschreiten durchgeführt wird, die notwendig ist, damit die Längsposition des Fußgängers sich in jedem Zeitpunkt ($t_i$) der Simulation in Höhe der Vorderseite des Fahrzeugs befindet, und dass die Bedeutung der Zone umso größer ist, je kürzer diese Lebensdauer ($\tau$) ist, wobei nur die Längsposition ($x$) des Fußgängers und seine Geschwindigkeit ($V_p$) dann berücksichtigt werden, wobei die Bedeutungszonen in Form von Streifen parallel zur Ordinatenachse definiert werden.

5. Verfahren zur Zusammenstoßvorhersage nach Anspruch 1, **dadurch gekennzeichnet, dass** die Aufteilung des Raums in Bedeutungszonen vor dem Fahrzeug gemäß einem augenblicklichen orthonormierten Koordinatensystem, das an der Vorderseite des Fahrzeugs befestigt ist, unter Berücksichtigung der Winkelposition des Fußgängers in der von den Achsen (Ox und Oy) des Koordinatensystems des Fahrzeugs definierten Ebene durchgeführt wird, die mit dem Verhältnis ihrer Seitenposition ($y$) zu ihrer Längsposition ($x$) erhalten wird, wobei die Bedeutungszonen in Form von Ausgangssektoren (0) definiert werden, die bezüglich der Abszissenachse (Ox) einen Winkel ($\theta$) gleich dem Tangentenbogen des Verhältnisses zwischen diesen zwei Positionen bilden:

6. Verfahren zur Zusammenstoßvorhersage nach Anspruch 1, **dadurch gekennzeichnet, dass** die Aufteilung des Raums in Bedeutungszonen vor dem Fahrzeug gemäß einem augenblicklichen orthonormierten Koordinatensystem, das an der Vorderseite des Fahrzeugs befestigt ist, ausgehend von der Richtung der relativen Geschwindigkeit des Fußgängers bezüglich des Fahrzeugs durchgeführt wird, die entweder durch den Tangentenbogen des Verhältnisses zwischen seiner Längsgeschwindigkeit und seiner Seitengeschwindigkeit, oder durch den Tangentenbogen des Verhältnisses zwischen der Geschwindigkeit des Fußgängers ($V_{pie}$) und derjenigen des Fahrzeugs ($V_{veh}$) erhalten wird:

$$\alpha = \arctan\left(\frac{V_{pie}}{V_{veh}}\right)$$

wobei die Bedeutungszonen in Form von gleichschenkligen Dreiecken mit der Höhe auf der Abszissenachse (Ox) und der Basis auf der Ordinatenachse (Oy) und mit einem Scheitelwinkel ($\alpha$) definiert werden, der von dem Tangentenbogen des Verhältnisses zwischen der Geschwindigkeit des Fußgängers und derjenigen des Fahrzeugs definiert wird:

$$\alpha = \arctan\left(\frac{V_{pie}}{V_{veh}}\right)$$

7. Verfahren zur Zusammenstoßvorhersage nach Anspruch 1, **dadurch gekennzeichnet, dass** die Aufteilung des Raums in Bedeutungszonen vor dem Fahrzeug gemäß einem augenblicklichen orthonormierten Koordinatensystem, das an der Vorderseite des Fahrzeugs befestigt ist, ausgehend von der deterministischen Vorhersage durchgeführt wird, die gleichzeitig eine Lebensdauer ($\tau$) des Partikels und die Ordinate ($y^*$) verwendet, die die Seitenposition ($y$) des Fußgängers schätzt, wenn seine Längsposition Null ist, und die mit der Seitengeschwindigkeit des Fußgängers ($V_y^{pie}$) definiert wird durch:

$$y^* = y + \tau * V_y^{pie}$$

wobei drei Bedeutungsebenen in Abhängigkeit vom Absolutwert von $y^*$ definiert werden:

   - wenn gilt $|y^*| < y_{choc}$, ist die Bedeutung groß,
   - wenn gilt $y_{choc} \leq |y^*| \leq y_{inc}$, ist die Bedeutung maximal,
   - wenn gilt $y_{inc} < |y^*|$, ist die Bedeutung weniger groß, geringer als die erste Bedeutung.

8. Verfahren zur Zusammenstoßvorhersage nach einem der Ansprüche 1 bis 7, **dadurch gekennzeichnet, dass** es die folgenden Schritte aufweist:

- die Bestimmung des kinematischen Ausgangszustands des Fahrzeugs $[E_v(t_o)]$ und des Fußgängers $[E_p(t_o)]$, gefolgt von der Erzeugung einer Anzahl $(N_i)$ von Partikeln, denen je ein Gewicht $(p_i)$ zugewiesen ist und die einem Paar von simulierten Trajektorien für das Fahrzeug und für den Fußgänger im Zeitpunkt $(t_i)$ entsprechen, und für jedes von denen ein kinematischer Zustand $[E_v(t_i)$ und $E_p(t_i)]$ simuliert wird, der anschließend mit dem Ausgangszustand verglichen wird,

- wenn es einen Zusammenstoß gibt, die Schätzung und die Speicherung der Merkmale des Zusammenstoßes, ehe das betreffende Partikel beseitigt wird und die Simulation mit dem folgenden Partikel bis zum $N_i$-ten Partikel fortgesetzt wird,

- beim Verlassen der Zusammenstoßzone, ohne dass es einen Zusammenstoß gegeben hat, die Speicherung der Merkmale der betreffenden Trajektorie vor ihrer Beseitigung und der Fortsetzung der Simulation mit dem folgenden Partikel bis zum $N_i$-ten Partikel,

- wenn es keinen Zusammenstoß gibt, die Überprüfung, dass die Simulation nicht beendet ist, wenn dagegen die Simulation ohne Zusammenstoß beendet wird, setzt sie sich noch durch die Speicherung der letzten Trajektorie und ihre Beseitigung fort,

- wenn eines keinen Zusammenstoß gibt, wobei das betreffende Partikel überlebt hat, die Berechnung des Verhältnisses $(\beta_{i,k})$ zwischen dem Wert der seinem neuen Zustand im Zeitpunkt $(t_i)$ im Zustandsraum zugeordneten Bedeutung $(l_{i,k})$ und seinem Wert im vorhergehenden Zeitpunkt $(t_{i-1})$, der dann mit 1 verglichen wird:

   • wenn das Verhältnis $\beta_{i,k}$ gleich 1 ist, ist diese Trajektorie nicht von zunehmendem Interesse, und das Verfahren geht zur folgenden simulierten Trajektorie über,
   • wenn das Verhältnis $\beta_{i,k}$ geringer als 1 ist, die zufällige Beseitigung durch einen Schritt des "russischen Rouletts", des Partikels, das keine Interesse hat, mit Zuweisung eines neuen Gewichts $(p_k)$, wenn es überlebt,
   • wenn das Verhältnis $\beta_{i,k}$ größer als 1 ist, die Demultiplikation durch einen "Splitting"-Schritt des als bedeutend angesehenen Partikels in eine Anzahl $[n(k)]$ von neuen Partikeln, denen je ein anderes Gewicht zugeteilt wird als dasjenige des bedeutenden Partikels, und die im folgenden Zeitpunkt $(t_{i+1})$ verarbeitet werden,

- nach der Überprüfung, dass alle $N_i$ Partikel verarbeitet wurden, die Schätzung der Zusammenstoßwahrscheinlichkeit und der Merkmale des möglichen Zusammenstoßes ausgehend von den Statistiken über die gespeicherten Gewichte.

9. System zur Anwendung des Verfahrens zur Vorhersage eines Zusammenstoßes zwischen einem Fahrzeug und einem erfassten, mobilen Fußgänger, das sich an Bord des Fahrzeugs befindet, nach einem der Ansprüche 1 bis 8, **dadurch gekennzeichnet, dass** es Einrichtungen zur Erfassung von Hindernissen in der Umgebung des Fahrzeugs aufweist, die Einrichtungen zur Schätzung ihrer Position und ihrer Geschwindigkeit zugeordnet sind und die mit Einrichtungen zur Vorhersage eines Zusammenstoßes zwischen Fahrzeug und Fußgänger verbunden sind, wobei die Vorhersageeinrichtungen außerdem Informationen über die Dynamik des mit dem System ausgestatteten Fahrzeugs von Sensoren empfangen, die mit den Steuerungen des Fahrzeugs verbunden sind, und die jedem erfassten Hindernis eine Zusammenstoßwahrscheinlichkeit, eine Zeit vor Zusammenstoß, eine vorhergesehene Zusammenstoßzone und ggf. eine Geschwindigkeitswahrscheinlichkeit beim Zusammenstoß zuordnen, wobei die jedem Hindernis zugeordneten Informationen anschließend an Einrichtungen zur Auswahl der optimalen Gegenmaßnahme gesendet werden, die das System dringend anwenden muss, um den erfassten Fußgänger zu schützen.

10. Anwendungssystem nach Anspruch 9, **dadurch gekennzeichnet, dass** die Einrichtungen zur Zusammenstoßvorhersage jedem erfassten Hindernis eine Zusammenstoßgeschwindigkeit zuordnen.

$$E_v(t_o) , E_p(t_o) \quad e_1$$

$$N_i \quad e_2$$

FIG_1

$$k = k+1$$

Particule k
$E_v(t_i), E_p(t_i)$   $e_3$

Test
choc/non choc/
sortie   $e_4$

Choc     Sortie de la
zone de choc     non choc

Caractéristiques
choc   $e_5$

$t_i = t_o + \Delta T$   $e_8$

OUI     NON

non choc

$$I_{ik}(t), \beta_{ik} = I_{ik}(t_i) / I_{ik}(t_{i-1}) \quad e_9$$

Mémorisation   $e_6$

Suppression   $e_7$

$e_{10}$   $\beta \leqq 1$   $e_9$

$\beta < 1$     $\beta = 1$     $\beta > 1$

$e_{13}$

Roulette
russe
survie?   NON    OUI

$e_{11}$   Nouveau poids   Splitting

$e_{12}$

$0 < N_{i+1}$     $k \stackrel{?}{=} N_i$   $e_{14}$   NON     $k < N_i$

$e_{15}$

OUI     $0 < N_{i+1}$   NON     $P_{choc}, TTI$
ZIP   $e_{16}$

## FIG_2

## FIG_3

## FIG_4

## FIG_5

## FIG_6

non choc

incertain $+y_{inc}$
choc $+y_{choc}$

incertain $-y_{choc}$
$-y_{inc}$

non choc

$S_1$  $S_2$  $S_3$  $S_4$  $S_5$

$x_3$  $x_P$  $x_4$

## FIG_7

non choc

incertain $+y_{inc}$
choc $+y_{choc}$

incertain $-y_{choc}$
$-y_{inc}$

non choc

$E_1$  $E_2$  $E_3$

$x_1$  $x_2$
$x_P$

18

## FIG_8

## FIG_9

## FIG_10

non choc

incertain

choc

incertain

non choc

$+y_{inc}$

$+y_{choc}$

$-y_{choc}$

$-y_{inc}$

$0$

$A_2$

$A_3$

$A_1$

$x_P$

$x$

$y$

## FIG_11

non choc

incertain

choc

incertain

$+y_{inc}$

$+y_{choc}$

$-y_{choc}$

$-y_{inc}$

$0$

$y*$

$V_{pie}$

$P$

$x$

$y$

EP 1 920 421 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2864673

- FR 0315548

**Littérature non-brevet citée dans la description**

- **WAKIN C.F et al.** Design of Pedestrian Detection Systems for the Prediction of Car-to-Pedestrian Accidents. *Intelligent Transportation Systems,* Octobre 2004, 696-701

- **E.A. JOHNSON ; L.A. BERGMAN ; B.F. SPENCER.** Intelligent Monte Carlo Simulation and Discrepancy Sensitivity. *Computational Stochastic Mechanics,* 1999, 31-39